# EUROPEAN PATENT APPLICATION

(11) **EP 4 456 594 A1**
(43) Date of publication of application: **30.10.2024**
(21) Application number: 22909494.1
(22) Date of filing: 24.10.2022
(51) Int. Cl.: H04W 24/02, H04L 41/08, H04W 76/27

(54) **QOE CONFIGURATION RELEASE METHOD, AND DEVICE AND COMPUTER-READABLE STORAGE MEDIUM**

(30) Priority: 24.12.2021 CN 202111602603
(71) Applicant: Datang Mobile Communications Equipment Co., Ltd., Beijing 100085 (CN)
(72) Inventor: NI, Chunlin, Beijing 100085 (CN)
(74) Representative: Cabinet Nony
(86) International application number: PCT/CN2022/127005
(87) International publication number: WO 2023/116176

(57) **Abstract**

The present application relates to the technical field of wireless communications, and particularly relates to a QoE configuration release method, and a device and a computer-readable storage medium. In the embodiments of the present application, the method comprises: receiving QoE configuration release information sent by a network-side device, wherein the QoE configuration release information includes a release type parameter, which is used for indicating the type of a QoE configuration to be released by a terminal; and according to the release type parameter, determining a target QoE configuration that needs to be released, and releasing the target QoE configuration. In the embodiments of the present application, a terminal releases, according to a QoE configuration type notified by a network-side device, a QoE configuration corresponding to the QoE configuration type notified by the network-side device, such that the QoE configuration can be flexibly released, thereby further improving the system performance.

## Description

### Cross References to Related Applications

The present application claims priority to Chinese Patent Application No. 202111602603.5, filed to China National Intellectual Property Administration on December 24, 2021, and entitled "QOE CONFIGURATION RELEASE METHOD, AND DEVICE AND COMPUTER-READABLE STORAGE MEDIUM", the entire contents of which are incorporated herein by reference.

### Technical Field

The present disclosure relates to the technical field of radio communications, in particular to a QoE configuration release method, device and computer-readable storage medium.

### Background

The goal of Quality of Experience (QoE) is to collect user experience quality parameters of different service types. When the core network or the operation administration and maintenance (OAM) entity transmits the QoE configuration to the radio access network (RAN), the RAN forwards the QoE configuration to the user equipment (UE), and the UE collects the relevant QoE measurement report, and reports it to the RAN side, and then reports it to the server through the RAN, where the UE can also be called a terminal. The QoE measurement report is generated by the application layer of the terminal. After the report is generated, the QoE measurement report is transmitted to the access stratum (AS) of the UE, and the AS of the UE transmits the QoE measurement report to the RAN side through a radio resource control (RRC) message.

In the related art, when the RAN side needs to release the QoE configuration of the UE due to some reasons, the RAN notifies the UE of the QoE ID that needs to be released, and the terminal releases all QoE configuration corresponding to the QoE ID. Therefore, the current QoE configuration release method is too single.

### Summary

The present application provides a method for releasing QoE configuration, device, and computer-readable storage medium for flexibly releasing QoE configuration.

In the first aspect, embodiments of the present application provide a method for releasing QoE configuration, including: receiving QoE configuration release information transmitted by a network side device, wherein the QoE configuration release information comprises a release type parameter, and the release type parameter is used to indicate a type of QoE configuration to be released by a terminal; determining target QoE configuration that needs to be released according to the release type parameter; and releasing the target QoE configuration.

In the second aspect, embodiments of the present application also provides a method for releasing QoE configuration, including: generating QoE configuration release information comprising a release type parameter after determining that the terminal needs to release the QoE configuration; wherein the release type parameter is used to indicate a type of QoE configuration to be released by a terminal; transmitting the QoE configuration release information to the terminal.

In a third aspect, embodiments of the present application provide a terminal, including: a memory, a processor, and a transceiver; where: the memory is configured to store computer programs; the transceiver is configured to transmit and receive data under a control of the processor; the processor is configured to read the computer programs in the memory and perform the following operations: receiving QoE configuration release information transmitted by a network side device, where the QoE configuration release information comprises a release type parameter, and the release type parameter is used to indicate a type of QoE configuration to be released by a terminal; determining target QoE configuration that needs to be released according to the release type parameter; and releasing the target QoE configuration.

In a fourth aspect, embodiments of the present application provide a network side device, including a memory, a processor, and a transceiver; where: the memory is configured to store computer programs; the transceiver is configured to transmit and receive data under the control of the processor; the processor is configured to read the computer programs in the memory and perform the following operations: generating QoE configuration release information comprising a release type parameter after determining that the terminal needs to release the QoE configuration; wherein the release type parameter is used to indicate a type of QoE configuration to be released by a terminal; transmitting the QoE configuration release information to the terminal.

In the fifth aspect, embodiments of the present application provide a device for releasing QoE configuration, including: a receiving module, configured to receive QoE configuration release information transmitted by a network side device, wherein the QoE configuration release information comprises a release type parameter, and the release type parameter is used to indicate a type of QoE configuration to be released by a terminal; a determining module, configured to determine target QoE configuration that needs to be released according to the release type parameter; and release the target QoE configuration.

In a sixth aspect, embodiments of the present application provide a device for releasing QoE configuration, including: a generating module, configured to generate QoE configuration release information comprising a release type parameter after determining that the terminal needs to release the QoE configuration; wherein the release type parameter is used to indicate a type of QoE configuration to be released by a terminal; a transmitting module, configured to transmit the QoE configuration release information to the terminal.

In the seventh aspect, embodiments of the present application provide a computer-readable storage medium, the computer-readable storage medium stores computer programs, the computer programs are configured to cause the computer execute the methods in the above-mentioned first aspect or the second aspect.

In embodiments of the present application, after the terminal receives the QoE configuration release information including the release type parameter transmitted by a network side device, the release type parameter is used for indicating the type of QoE configuration to be released by the terminal, and the terminal can determine the target QoE configuration that needs to be released corresponding to the release type parameter based on the release type parameter in the QoE configuration release information, and release the target QoE configuration. The network side device notifies the terminal of the QoE configuration type that needs to be released, and the terminal, according to the QoE configuration type notified by the network side device, releases the QoE configuration corresponding to the QoE configuration type notified by the network side device, so that the QoE configuration can be released flexibly and system performance can be further improved.

### Brief Description of Figures

FIG. 1 is a schematic diagram of an application scenario in an embodiment of the present application.
FIG. 2 is a flow chart of a method for releasing QoE configuration in an embodiment of the present application.
FIG. 3 is a flow chart of a method for releasing QoE configuration in an embodiment of the present application.
FIG. 4 is a flow chart of a method for releasing QoE configuration in an embodiment of the present application.
FIG. 5 is a flow chart of a method for releasing QoE configuration in an embodiment of the present application.
FIG. 6 is a flow chart of a method for releasing QoE configuration in an embodiment of the present application.
FIG. 7 is a flow chart of a method for releasing QoE configuration in an embodiment of the present application.
FIG. 8 is a flow chart of a method for releasing QoE configuration in an embodiment of the present application.
FIG. 9 is a flow chart of a method for releasing QoE configuration in an embodiment of the present application.
FIG. 10 is a flow chart of a method for releasing QoE configuration in an embodiment of the present application.
FIG. 11 is a schematic structural diagram of a terminal in an embodiment of the present application.
FIG. 12 is a schematic structural diagram of a network side device in an embodiment of the present application.
FIG. 13 is a schematic structural diagram of a device for releasing QoE configuration in an embodiment of the present application.
FIG. 14 is another schematic structural diagram of a device for releasing QoE configuration in an embodiment of the present application.
FIG. 15 is a flow chart of a method for releasing QoE configuration in an embodiment of the present application.
FIG. 16 is another flow chart of a method for releasing QoE configuration in an embodiment of the present application.

### Detailed Description

The term "and/or" in embodiments of the present application describes the association relationship of associated objects, indicating that there may be three relationships, such as, A and/or B, which may mean: A exists alone, A and B exist simultaneously, and B exists alone. The character "P' generally indicates that the contextual objects are an "or" relationship.

The term "plurality" in embodiments of the present application refers to two or more, and other quantifiers are similar.

The technical solutions in embodiments of the present application will be clearly and completely described below in conjunction with the accompanying drawings in embodiments of the present application. Obviously, the described embodiments are only some embodiments of the present application, not all of them. Based on embodiments in the present application, all other embodiments obtained by persons of ordinary skill in the art without making creative efforts belong to the scope of protection of this application.

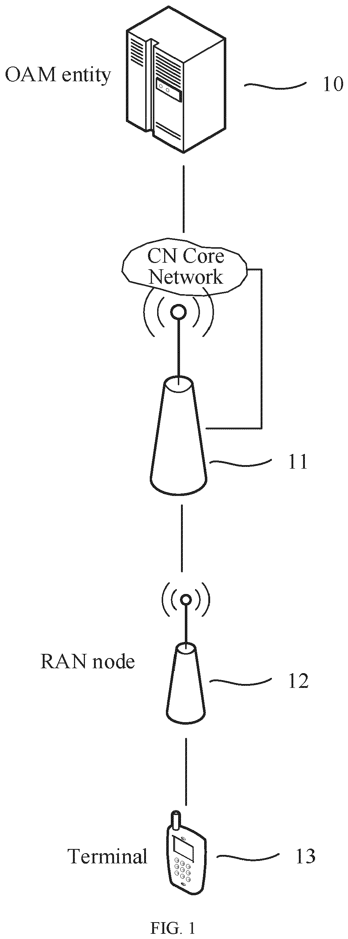

As shown in FIG. 1, an optional application scenario of embodiments of the present application, the radio communication system includes an OAM entity 10, a Core Network (CN) device 11, a RAN node 12, and a terminal 13.

In this application scenario, embodiments of the present application provide two kinds of QoE measurement. One of which is signaling based (Signalling based), the process is that the OAM entity 10 transmits the QoE configuration to the core network, and the core network device 11 transmits the QoE configuration to the RAN node 12. The RAN node 12 forwards the QoE configuration to the terminal 13; and the QoE configuration in this case is for a specific UE. The other of which is a management based (Management based), and the process is that the OAM entity 10 directly transmits the QoE configuration to the RAN node 12, the RAN node 12 then forwards the QoE configuration to the terminal 13, and in this case, the QoE configuration is configured for multiple UEs.

After the RAN node 12 determines that the terminal needs to release the QoE configuration, it generates QoE configuration release information that includes a release type parameter, and the release type parameter is configured to indicate the type of QoE configuration that needs to be released by the terminal; and the RAN node 12 transmits the QoE configuration release information to the terminal 13.

The terminal 13 receives the QoE configuration release information including the release type parameter transmitted by the RAN node 12; and determines the target QoE configuration to be released according to the release type parameter in the QoE configuration release information, and releases the target QoE configuration.

It should be noted that when the RAN node determines whether the terminal needs to release the QoE configuration, the RAN node determines whether the current terminal moves out of the effective range of the QoE configuration, and after the terminal moves out of the effective range of the QoE configuration, the RAN node determines that the terminal needs to release the QoE configuration. Or, the RAN node determines whether there is a network failure, if the RAN node determines that the QoE configuration needs to be released due to the type of network failure, the RAN node determines that the terminal needs to release the QoE configuration. Or, after the RAN node determines that the QoE configuration needs to be released due to manual network management, the RAN node determines that the terminal needs to release the QoE configuration.

The RAN node of the radio communication system in embodiments of the present application transmits a RRC reconfiguration message to the terminal after determining that the terminal needs to release the QoE configuration; where, the RRC reconfiguration message includes QoE configuration release information, and the QoE configuration release information includes the release type parameter.

The release type parameters in embodiments of the present application include a configuration type parameter and/or a service type parameter.

Where, the configuration type parameter can be the first configuration type parameter, for example, the first configuration type can be a QoE configuration type (Traditional QoE) invisible to the network side device, or the first configuration type can be the Traditional QoE and the QoE configuration type (RAN-visible QoE) visible to the network side device.

The service type parameter includes but not limited to: string, streaming media, Multimedia Telephony Service for IMS (MTSI).

After receiving the RRC reconfiguration message transmitted by the network side device, the terminal parses the QoE configuration release information from the RRC reconfiguration message, and obtains the release type parameter included in the QoE configuration release information, and determines the target QoE configuration corresponding to the release type parameter according to the release type parameter, and release the target QoE configuration.

The technical solutions provided by embodiments of the present application can be applied to various systems, especially 5G (5th Generation Mobile Communication Technology) systems. For example, the applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, an universal mobile telecommunications system (UMTS), a worldwide interoperability for microwave access (WiMAX) system, a 5G new radio (NR) system, etc. These various systems include terminal devices and network devices. The system may also include a core network portion, such as an evolved packet system (EPS), a 5G system (5GS), and the like.

The terminal involved in embodiments of the present application may be a device that provides voice and/or data connectivity to users, a handheld device with a wireless connection function, or other processing devices connected to a wireless modem. In different systems, the names of terminal device may be different. For example, in a 5G system, a terminal may be called the user equipment (UE). The wireless terminal device can communicate with one or more core networks (CN) via the radio access network (RAN), and the wireless terminal device can be a mobile terminal device, such as a mobile phone (or called a "cellular "telephones) and computers with mobile terminal device, such as portable, pocket, hand-held, computer built-in or vehicle-mounted mobile devices, which exchange language and/or data with the radio access network. For example, they can be a Personal Communication Service (PCS) phone, a cordless phone, a Session Initiated Protocol (SIP) phone, a Wireless Local Loop (WLL) station, a Personal Digital Assistant, PDA) and other devices. Wireless terminal device can also be called system, subscriber unit, subscriber station, mobile station, mobile station, remote station, access point, remote terminal device, access terminal device, user terminal device, user agent, and user device, which are not limited in embodiments of this application.

The network side device involved in embodiments of the present application may be a base station, and the base station may include multiple cells that provide services for terminals. According to different application scenarios, base stations can also be referred to as access points, or devices in the access network that communicate with wireless terminal devices through one or more sectors on the air interface, or other names. The network side device can be configured to exchange received air frames and internet protocol (IP) packets, and act as a router between the wireless terminal device and the rest of the access network, where the rest of the access network can include Internet Protocol (IP) communication network. The network side device can also coordinate attribute management of the air interface. For example, the network side device involved in embodiments of the present application may be a Global System for Mobile communications, (GSM), or a network device (Base Transceiver Station, BTS) in the Code Division Multiple Access (CDMA), it can also be a network device (NodeB) in Wideband Code Division Multiple Access (WCDMA), or it can be an evolved network (evolutional Node B, eNB or e-NodeB) in a long term evolution (LTE) system, 5G base station (gNB) in the 5G network architecture (next generation system), can also be a Home evolved Node B (HeNB), relay node, a femto, a pico, etc., are not limited in embodiments of the present application. In some network structures, a network device may include a centralized unit (CU) node and a distributed unit (DU) node, and the centralized unit and the distributed unit may also be arranged geographically separately.

One or more antennas can be used between the network side device and the terminal for Multi Input Multi Output (MIMO) transmission, and MIMO transmission can be Single User MIMO (SU-MIMO) or Multi-User MIMO (MU-MIMO). According to the morphology and number of root antenna combinations, MIMO transmission can be 2D-MIMO, 3D-MIMO, FD-MIMO, or massive-MIMO, or diversity transmission, precoding transmission, or beamforming transmission, etc.

Where, the release type parameter(s) in embodiments of the present application include the configuration type parameter and/or the service type parameters.

The QoE configuration type may be a configuration type that is invisible to the network side device, or may be a configuration type that is visible to the network side device.

It should be noted that the network side device in embodiments of the present application may be a RAN node.

The following is an introduction to two different types of QoE configuration.

### 1. QoE invisible to network side devices

In the two system frameworks of signaling-based measurement configuration and management-based measurement configuration, the processes that the RAN node transmits the QoE configuration to the UE are the same and the configuration parameters are also the same. The QoE configuration file is encapsulated in a file for the RAN node, and the RAN node does not unseal the file and directly and transparently transmits it to the UE through RRC signaling. This type of QoE configuration is not visible to the RAN node.

QoE measurement management parameters are defined in the R16 protocol version, including but not limited to the following parameters.

### A. QoE collection entity address

This parameter is configured to define the IP address to which the QMC record is transmitted, and the IPv4 or IPv6 address can be used specifically.

### B. QoE reference

This parameter is configured to define the network request session. The QoE reference is globally unique and consists of MCC+MNC+QMC ID.

Among them, MCC and MNC come from the management system together with the trace activation request, and are used to define a PLMN contained in the management system, and the QMC ID is a 3-byte string.

### C. QoE identifier information

The QoE identifier information can also be called measurement ID (measurement identifier). This parameter is used to identify the QoE configuration and measurement report on the UE side, and is used for the interaction between the RAN node and the UE on the air interface. The RAN node is responsible for mapping the ID with the above-mentioned QoE reference one by one.

### D. QMC configuration file

This parameter is the QoE configuration file defined by the application layer service.

### E. Service Type (service type parameter)

This parameter is used to define the service type that requires QoE measurement; where the service type parameter includes string, streaming media, MTSI and other types.

### F. Area Scope

This parameter is used to define the effective area of QoE configuration, which can include cell list, TA list, etc.

After the AS of the UE receives the QoE configuration through the RRC message, the AS transmits the QoE configuration to the application layer through the directory defined by the AT command, wherein the QoE configuration includes the parameters: Service Type, QoE reference and QMC configuration file. When the service with the service type corresponding to the configuration starts to occur, the application layer starts to measure according to the configuration file, and generates a QoE measurement report according to the configuration conditions. Once the QoE measurement report is generated, the application layer of the UE transmits the QoE report to the AS of the UE through the AT command, the AS of the UE immediately transmits the QoE to the RAN node through the RRC message; and the RAN node transmits the report to the server corresponding to the IP address defined by the configuration file, thereby completing the QoE configuration and measurement report collection process.

### 2. QoE visible to network side devices

The QoE visible to the network side device can be called RAN-visible QoE. This type of QoE configuration is generated by the RAN node and configured to the UE. After the RAN node receives the QoE report from the UE, the RAN node can directly understand the QoE report, rather than reporting it after encapsulation.

Among them, RAN-visible QoE measures management parameters, including but not limited to the following parameters.

### A. RAN visible QoE metrics

The reported QoE parameters, such as Buffer level, Playout delay (play delay), etc., collected by the UE.

### B. QoE identifier information

The QoE identifier information can also be called measurement ID. This parameter is used to identify the QoE configuration and the measurement report on the UE side, and is used for the interaction between the RAN node and the UE on the air interface. This identifier shares the same identifier with the QoE of the first configuration type.

### D. Service Type (Service Type parameter)

This parameter is used to define the service type that requires QoE measurement. The service type parameters include string, streaming media, MTSI and other types.

In embodiments of the present application, when the network side device determines that the terminal needs to release the QoE configuration, the network side device transmits the QoE configuration release information to the terminal. The terminal performs configuration release after receiving the QoE configuration release information, and processes the collected measurement report data according to the actual situation.

Where, the reason why the network side device determines that the terminal needs to release the QoE configuration and generates the release message includes but is not limited to normal release, and the terminal moves out of the effective range of the QoE configuration.

Normal release includes, but is not limited to: release by human management, release due to network failure.

After receiving the QoE configuration release information transmitted by the network side device, the terminal determines the target QoE configuration that needs to be released corresponding to the release type parameter according to the release type parameter in the QoE configuration release information, and releases the target QoE configuration.

The detailed process of releasing the target QoE configuration in embodiments of the present application is introduced in detail below.

First, the target QoE configuration to be released is determined according to the release type parameter included in the QoE configuration release information.

### 1. The release type parameter includes the configuration type parameter.

The QoE identifier information is also included in the QoE configuration release information transmitted by the network side device to the terminal.

The terminal determines a candidate QoE configuration corresponding to the QoE identifier information according to the QoE identifier information, and selects a QoE configuration corresponding to the configuration type parameter from the candidate QoE configuration as the target QoE configuration.

During implementation, the QoE configuration release information transmitted by the network side device to the terminal in embodiments of the present application includes the QoE identifier information and the configuration type parameter.

When determining the target QoE configuration, determine all QoE configuration corresponding to the QoE identifier information as the candidate QoE configuration; then select the QoE configuration corresponding to the configuration type parameter from the candidate QoE configuration as the target QoE configuration.

As an optional implementation manner, if the configuration type parameter included in the QoE configuration release information is the first configuration type parameter, then all QoE configuration in the candidate QoE configuration is used as the target QoE configuration.

For example, the configuration type of QoE includes the QoE configuration (Traditional QoE) that is invisible to network side device and the QoE configuration (RAN-visible QoE) that is visible to network side device, then the first configuration type parameter can be the Traditional QoE, or the first configuration type parameter can be the Traditional QoE and the RAN-visible QoE.

If the configuration type parameter included in the QoE configuration release information is a second configuration type parameter, a QoE configuration visible to the network side device is selected from the candidate QoE configuration as the target QoE configuration.

For example, the configuration type of QoE includes the QoE configuration (Traditional QoE) that is invisible to network side device and the QoE configuration (RAN-visible QoE) that is visible to network side device, then the second configuration type parameter can be the RAN-visible QoE.

### 2. The release type parameter includes the service type parameter.

In embodiments of the present application, when the QoE configuration release information transmitted by the network side device to the terminal includes the service type parameter, the QoE configuration corresponding to the service type parameter is used as the target QoE configuration.

If the release type parameter included in the QoE configuration release information transmitted by the network side device to the terminal is the service type parameter, the terminal determines all QoE configuration corresponding to the service type parameter as the target QoE configuration. For example, assuming that the service type parameter included in the QoE configuration release information are the string, the terminal uses the QoE configuration of the string type as the target QoE configuration.

### 3. Release type parameters include the configuration type parameter and the service type parameter.

In embodiments of the present application, when the QoE configuration release information transmitted by the network side device to the terminal includes the configuration type parameter and the service type parameter, the QoE configuration corresponding to the configuration type parameter is selected from the QoE configuration corresponding to the service type parameter as the target QoE configuration.

Since the QoE configuration can be divided into the QoE configuration of different configuration types based on the configuration type parameters, the QoE configuration can also be divided into the QoE configuration of different service types based on the service type parameter.

When the QoE configuration release information transmitted by the network side device to the terminal includes both the configuration type parameter and the service type parameter, and when the terminal determines the target QoE configuration, the terminal determines a part of the QoE configuration based on the service type parameter included in the QoE configuration release information, and the terminal determines a part of QoE configuration based on the configuration type parameter included in the QoE configuration release information, and determines the same QoE configuration in the two parts as the target QoE configuration.

During implementation, in embodiments of the present application, the QoE configuration corresponding to the service type parameter may be determined based on the service type parameter, and then the QoE configuration corresponding to the configuration type parameter is selected from the QoE configuration corresponding to the service type parameter as the target QoE configuration.

As an optional implementation manner, if the configuration type parameter included in the QoE configuration release information is the first configuration type parameter, then all QoE configuration corresponding to the service type parameter is used as the target QoE configuration.

For example, the QoE configuration type includes the Traditional QoE and the RAN-visible QoE, the first configuration type parameter carried in the QoE configuration release information can be expressed as the Traditional QoE. When the configuration type parameter included in the QoE configuration release information received by the terminal is Traditional QoE, the terminal releases all QoE configuration corresponding to the service type parameter, that is, the terminal releases the Traditional QoE configuration and the RAN-visible QoE configuration corresponding to the service type parameter. Or the first configuration type parameter carried in the QoE configuration release information can be expressed as the Traditional QoE and the RAN-visible QoE. When the configuration type parameter included in the QoE configuration release information received by the terminal are the Traditional QoE and the RAN-visible QoE, the terminal release all QoE configuration corresponding to the service type parameter, that is, the terminal releases the Traditional QoE configuration and the RAN-visible QoE configuration corresponding to the service type parameter.

If the configuration type parameter included in the QoE configuration release information is the second configuration type parameter, then the QoE configuration visible to the network side device is selected from the QoE configuration corresponding to the service type parameter as the target QoE configuration.

For example, the QoE configuration type includes the Traditional QoE and the RAN-visible QoE, the second configuration type parameter carried in the QoE configuration release information can be expressed as the RAN-visible QoE. When the configuration type parameter included in the QoE configuration release information received by the terminal is the RAN-visible QoE, the terminal releases the RAN-visible QoE configuration corresponding to the service type parameter.

In addition, in an optional implementation manner, the QoE configuration release information in embodiments of the present application also includes a release reason parameter used to indicate the reason for releasing the QoE configuration.

Where, the release reason parameter includes but not limited to normal release, and the terminal moves out of the effective range of the QoE configuration.

In embodiments of the present application, after the target QoE configuration to be released is determined according to the release type parameter in the QoE configuration release information, the release timing of the release target QoE configuration is determined according to the release reason parameter. After the release timing is reached, the target QoE configuration is released.

During implementation, if the release reason parameter indicates that the reason for releasing the QoE configuration is normal release, the current moment is used as the release timing for releasing the target QoE configuration.

When the release reason parameter is normal release, in embodiments of the present application, the target QoE configuration is released immediately after the target QoE configuration that needs to be released is determined, and the measurement report related to the target QoE configuration is deleted.

If the release reason parameter indicates that the reason for releasing the QoE configuration is that the terminal moves out of the effective range of the QoE configuration, then the release timing for releasing the target QoE configuration is determined according to the current QoE measurement state of the terminal.

Optionally, if the current QoE measurement state of the terminal is that no QoE measurement is performed, then the current moment is used as the release timing for releasing the target QoE configuration. If the current QoE measurement state of the terminal is that QoE measurement is being performed, a moment at which the QoE measurement ends is determined as the release timing for releasing the target QoE configuration.

It should be noted that after the target QoE configuration is determined, if the current terminal is performing QoE measurement, the terminal needs to complete this QoE measurement. After this QoE measurement is completed, a QoE measurement report is generated according to the QoE measurement result and the target QoE configuration is released.

In embodiments of the present application, after the network side device transmits the QoE configuration release information to the terminal, the QoE measurement report obtained by the terminal performing QoE measurement can be processed in the following manner. If a target network side device accessed by the terminal after the terminal moves out of the effective range of the QoE configuration supports reporting of measurement reports, the QoE measurement report is reported to the target network side device.

It should be noted that since the target network side device which the terminal switches to access supports reporting of measurement reports, it means that the target network side device can receive the measurement report reported by the terminal, and the terminal can report the QoE measurement report obtained by performing QoE measurement to the target network side device.

If the target network side device accessed by the terminal after the terminal moves out of the effective range of the QoE configuration does not support reporting of measurement report, the QoE measurement report is stored. As an optional method, the terminal reports the QoE measurement report to a network side device that supports reporting of measurement reports after the terminal accesses the network side device that supports reporting of measurement reports.

In this way, the terminal stores the QoE measurement report until the terminal switches again and accesses the network side device that supports reporting of measurement report, and the terminal reports the QoE measurement report to the network side device that supports reporting of measurement report.

If the target network side device accessed by the terminal does not support the reporting of measurement report after the terminal moves out of the effective range of the QoE configuration, the QoE measurement report is stored. Another optional implementation method is that if the terminal accesses a network side node, supporting reporting of measurement reports, within a preset period of time, the QoE measurement report is reported to the network side device that supports reporting of measurement reports, otherwise, the QoE measurement report is deleted.

In implementation, after the terminal determines that the target network side device accessed by the terminal after moving out of the effective range of the QoE configuration does not support the reporting of measurement report, the QoE measurement report is stored, and the timer can be started at the same time and the preset duration can be set. If the terminal accesses a network side device that supports reporting of measurement reports before the timing of the timer ends, the QoE measurement report is reported to the network side device that supports reporting of measurement reports. If the terminal is not accessed to the network side device that supports reporting of measurement reports at the end of the timing of the timer, the stored QoE measurement report is deleted.

It should be noted that if the QoE configuration release information transmitted by the network side device to the terminal includes no release reason parameter, the terminal may release the target QoE configuration immediately after receiving the QoE configuration release information and determining the target QoE configuration that needs to be released.

Optionally, the encoding structure corresponding to the method for releasing QoE configuration implemented in the present application may be the following.

### Example 1:

```
     QoE configuration release list IE
     >QoE ID
        >>Traditional QoE configuration (optionally)
           >>>Release cause value: (normal, out of area scope...)
        >>RAN-visible QoE (optionally)
           >>>Release cause value: (normal, out of area scope...)
     > Service type.
```

### Example 2:

```
QoE configuration release list IE
     >QoE ID
        » QoE configuration type (value is: Traditional, RAN-visible, both, ..... )
           >>>Release cause value :( normal, out of area scope...)
     > Service type.
```

The method for releasing the QoE configuration of the present application is introduced below in combination with several embodiments.

### Embodiment 1

Assuming that the QoE configuration release information transmitted by the network side device to the terminal includes the QoE identifier, the configuration type parameter which is Traditional QoE, and the release reason which is normal release.

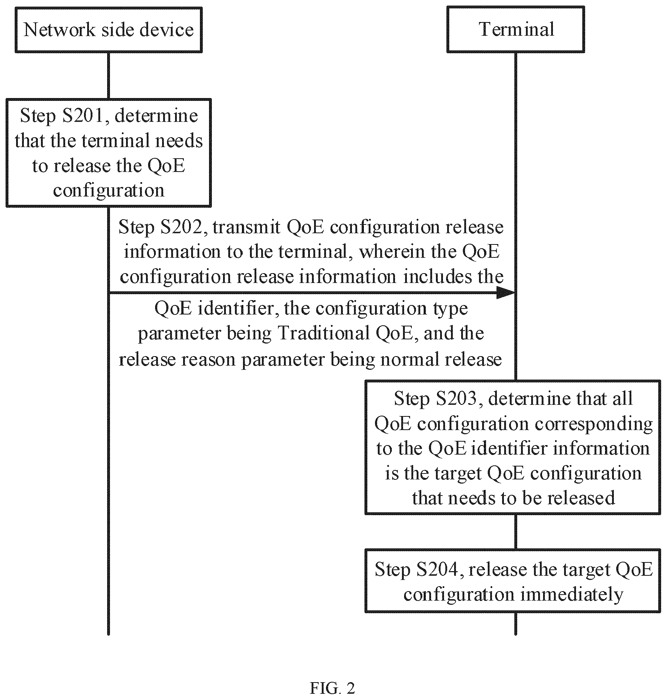

As shown in FIG. 2, in embodiments of the present application, the method for releasing QoE configuration includes the following steps.

Step S201, the network side device determines that the terminal needs to release the QoE configuration.

Step S202, the network side device transmits QoE configuration release information to the terminal, wherein QoE configuration release information includes the QoE identifier, the configuration type parameter which is Traditional QoE, and the release reason parameter which is normal release.

Step S203, the terminal determines that all QoE configuration corresponding to the QoE identifier information is the target QoE configuration that needs to be released.

Among them, all QoE configuration corresponding to the QoE identifier information includes the Traditional QoE and the RAN-visible QoE.

Step S204, the terminal immediately releases the target QoE configuration.

It should be noted that when the configuration type parameters included in the QoE configuration release information are the Traditional QoE and the RAN-visible QoE, the QoE configuration release process is the same as that shown in FIG. 2.

### Embodiment 2

Assuming that the QoE configuration release information transmitted by the network side device to the terminal includes the QoE identifier, the configuration type parameter which is RAN-visible QoE, and the release reason which is normal release.

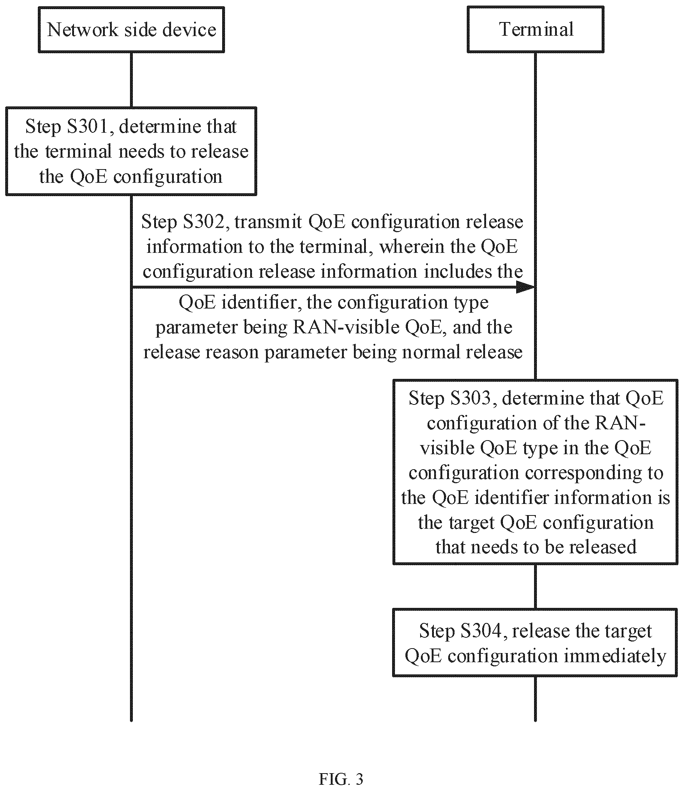

As shown in FIG. 3, in the embodiment of the present application, the method for releasing QoE configuration includes the following steps.

Step S301, the network side device determines that the terminal needs to release the QoE configuration.

Step S302, the network side device transmits QoE configuration release information to the terminal, wherein the QoE configuration release information includes the QoE identifier, the configuration type parameter which is RAN-visible QoE, and the release reason parameter which is normal release.

Step S303, the terminal determines that QoE configuration of the RAN-visible QoE type in the QoE configuration corresponding to the QoE identifier information is the target QoE configuration that needs to be released.

Step S304, the terminal immediately releases the target QoE configuration.

### Embodiment 3

Assuming that the QoE configuration release information transmitted by the network side device to the terminal includes the QoE identifier, the configuration type parameter which is Traditional QoE, and the release reason which is that the terminal moves out of the effective range of the QoE configuration.

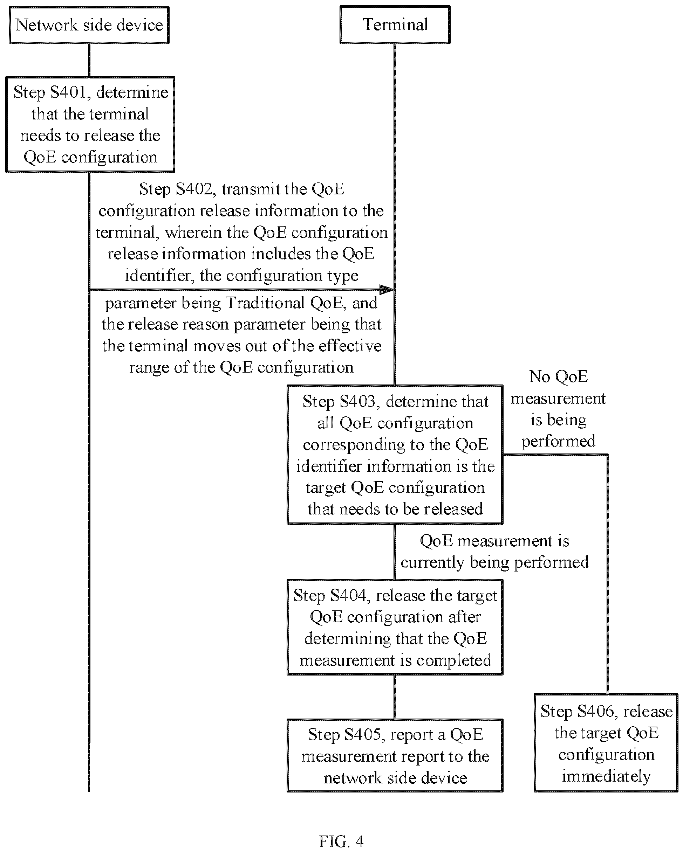

As shown in FIG. 4, in embodiments of the present application, the method for releasing QoE configuration includes the following steps.

Step S401, the network side device determines that the terminal needs to release the QoE configuration.

Step S402, the network side device transmits the QoE configuration release information to the terminal, wherein the QoE configuration release information includes the QoE identifier, the configuration type parameter which is Traditional QoE, and the release reason parameter. The release reason parameter is that the terminal moves out of the effective range of the QoE configuration.

Step S403, the terminal determines that all QoE configuration corresponding to the QoE identifier information is the target QoE configuration that needs to be released.

Among them, all QoE configuration corresponding to the QoE identifier information includes the Traditional QoE and the RAN-visible QoE.

The terminal determines whether QoE measurement is currently being performed; if yes, step S404 is executed, if not, step S406 is executed.

Step S404, the terminal releases the target QoE configuration after determining that the QoE measurement is completed.

Step S405, the terminal reports a QoE measurement report to the network side device.

Among them, the terminal needs to determine the specific manner for reporting the measurement report according to whether the target network side device accessed by the terminal supports reporting the measurement report after moving out of the effective range of the QoE configuration. The specific manner for the terminal to determine and report the measurement report can refer to the description above.

Step S406, the terminal immediately releases the target QoE configuration.

It should be noted that when the configuration type parameters included in the QoE configuration release information are the Traditional QoE and the RAN-visible QoE, the QoE configuration release process is the same as that shown in FIG. 4.

### Embodiment 4

Assuming that the QoE configuration release information transmitted by the network side device to the terminal includes the QoE identifier, the configuration type parameter which is RAN-visible QoE, and the release reason. The release reason is that the terminal moves out of the effective range of the QoE configuration.

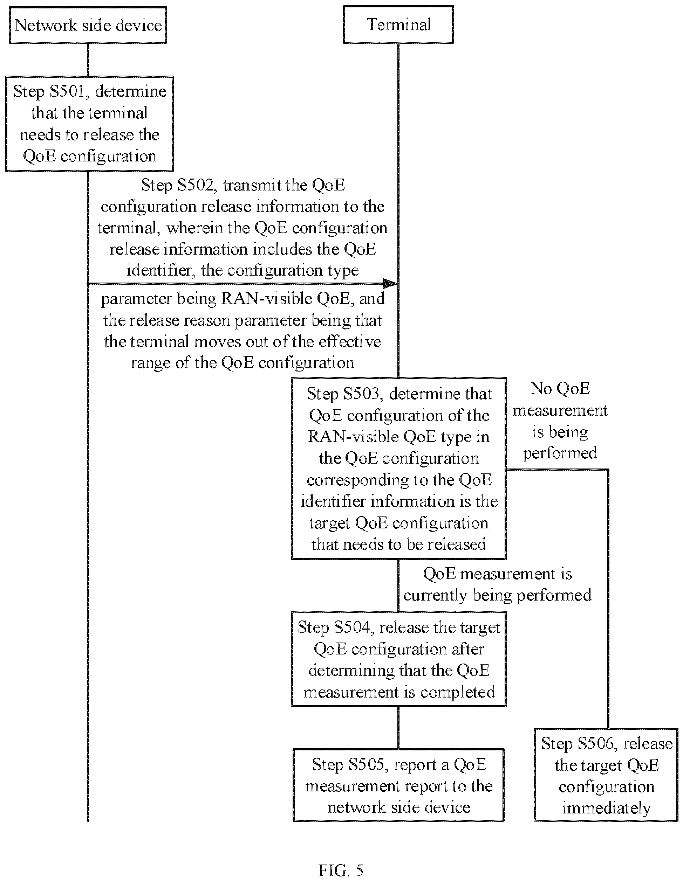

As shown in FIG. 5, in embodiments of the present application, the method for releasing QoE configuration includes the following steps.

Step S501, the network side device determines that the terminal needs to release the QoE configuration.

Step S502, the network side device transmits the QoE configuration release information to the terminal, wherein the QoE configuration release information includes the QoE identifier, the configuration type parameter which is RAN-visible QoE, and the release reason parameter. The release reason parameter is that the terminal moves out of the effective range of the QoE configuration.

Step S503, the terminal determines that QoE configuration of the RAN-visible QoE type in the QoE configuration corresponding to the QoE identifier information is the target QoE configuration that needs to be released.

The terminal determines whether QoE measurement is currently being performed; if yes, step S504 is executed, if not, step S506 is executed.

Step S504, the terminal releases the target QoE configuration after determining that the QoE measurement is completed.

Step S505, the terminal reports a QoE measurement report to the network side device.

Among them, the terminal needs to determine the specific manner for reporting the measurement report according to whether the target network side device accessed by the terminal supports reporting the measurement report after moving out of the effective range of the QoE configuration. The specific manner for the terminal to determine and report the measurement report can refer to the description above.

Step S506, the terminal immediately releases the target QoE configuration.

### Embodiment 5

Assuming that the QoE configuration release information transmitted by the network side device to the terminal includes a service type parameter.

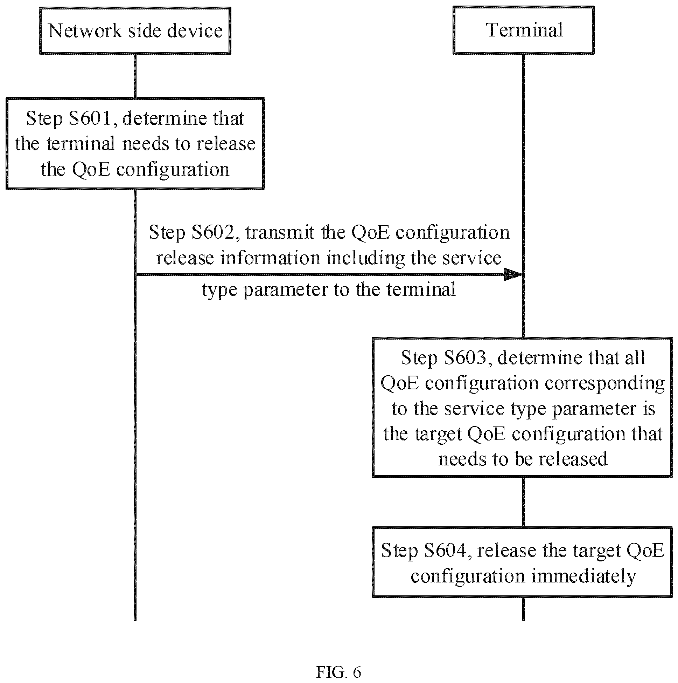

As shown in FIG. 6, in embodiments of the present application, the method for releasing QoE configuration includes the following steps.

Step S601, the network side device determines that the terminal needs to release the QoE configuration.

Step S602, the network side device transmits the QoE configuration release information including the service type parameter to the terminal.

Step S603, the terminal determines that all QoE configuration corresponding to the service type parameter is the target QoE configuration that needs to be released.

Step S604, the terminal immediately releases the target QoE configuration.

### Embodiment 6

Assuming that the QoE configuration release information transmitted by the network side device to the terminal includes the service type parameter, the configuration type parameter which is Traditional QoE, and the release reason which is normal release.

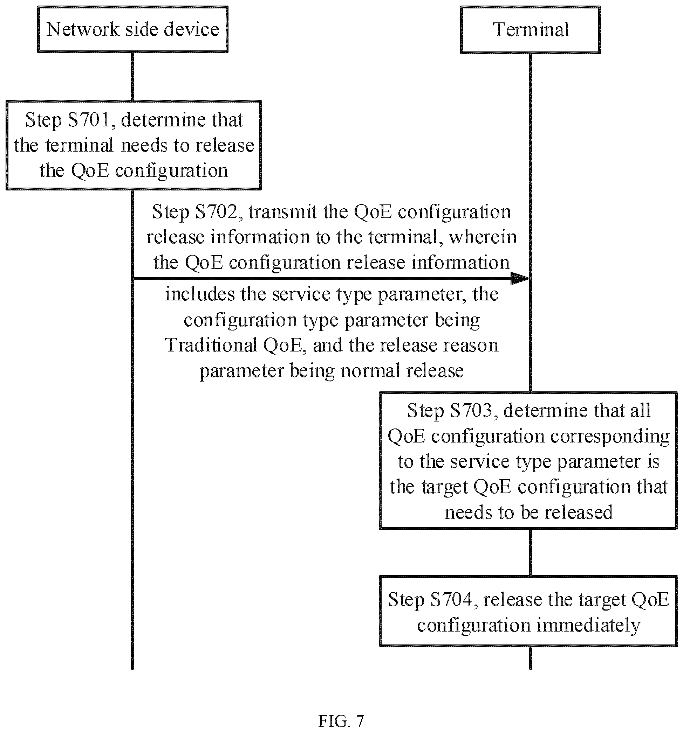

As shown in FIG. 7, in embodiments of the present application, the method for releasing QoE configuration includes the following steps.

Step S701, the network side device determines that the terminal needs to release the QoE configuration.

Step S702, the network side device transmits the QoE configuration release information to the terminal, wherein the QoE configuration release information includes the service type parameter, the configuration type parameter which is Traditional QoE, and the release reason parameter which is normal release.

Step S703, the terminal determines that all QoE configuration corresponding to the service type parameter is the target QoE configuration that needs to be released.

Step S704, the terminal immediately releases the target QoE configuration.

It should be noted that when the configuration type parameters included in the QoE configuration release information are the Traditional QoE and the RAN-visible QoE, the QoE configuration release process is the same as that shown in FIG. 7.

### Embodiment 7

Assuming that the QoE configuration release information transmitted by the network side device to the terminal includes the service type parameter, the configuration type parameter which is RAN-visible QoE, and the release reason which is normal release.

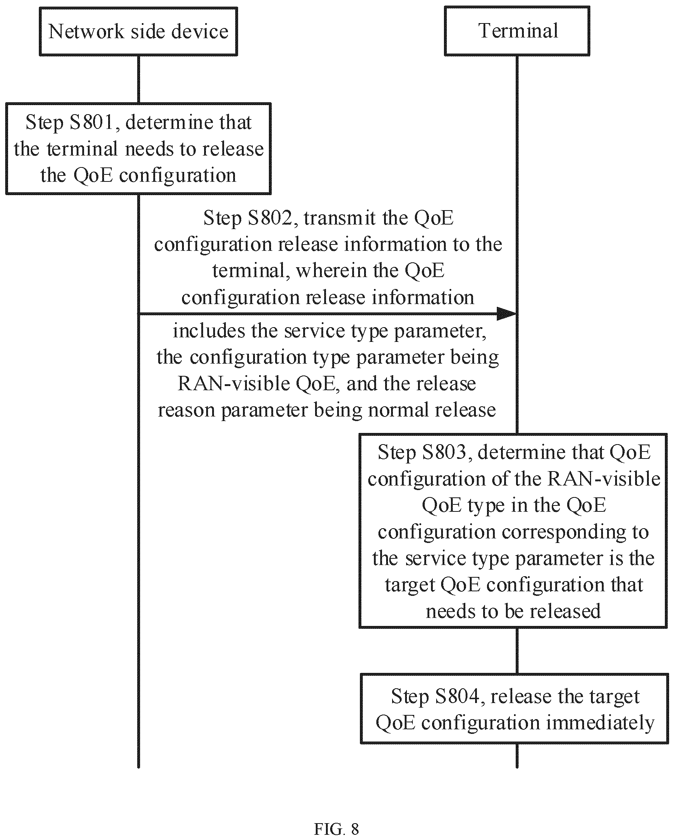

As shown in FIG. 8, in embodiments of the present application, the method for releasing QoE configuration includes the following steps.

Step S801, the network side device determines that the terminal needs to release the QoE configuration.

Step S802, the network side device transmits the QoE configuration release information to the terminal, wherein the QoE configuration release information includes the service type parameter, the configuration type parameter which is RAN-visible QoE, and the release reason parameter which is normal release.

Step S803, the terminal determines that QoE configuration of the RAN-visible QoE type in the QoE configuration corresponding to the service type parameter is the target QoE configuration that needs to be released.

Step S804, the terminal immediately releases the target QoE configuration.

### Embodiment 8

Assuming that the QoE configuration release information transmitted by the network side device to the terminal includes the service type parameter, the configuration type parameter which is Traditional QoE, and the release reason. The release reason is that the terminal moves out of the effective range of the QoE configuration.

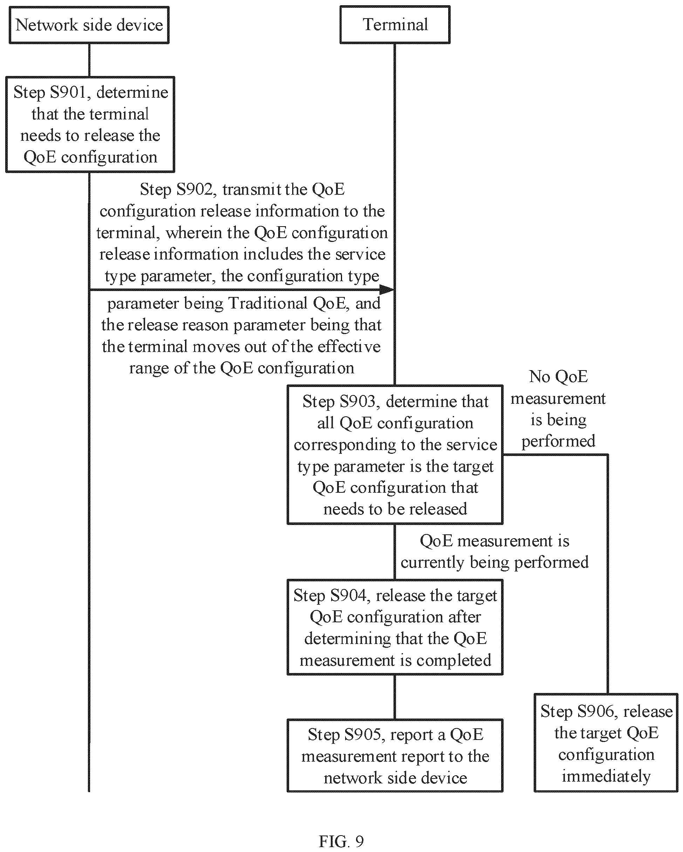

As shown in FIG. 9, in embodiments of the present application, the method for releasing QoE configuration includes the following steps.

Step S901, the network side device determines that the terminal needs to release the QoE configuration.

Step S902, the network side device transmits the QoE configuration release information to the terminal, wherein the QoE configuration release information includes the service type parameter, the configuration type parameter which is Traditional QoE, and the release reason parameter. The release reason parameter is that the terminal moves out of the effective range of the QoE configuration.

Step S903, the terminal determines that all QoE configuration corresponding to the service type parameter is the target QoE configuration that needs to be released.

The terminal determines whether QoE measurement is currently being performed; if yes, step S904 is executed, if not, step S906 is executed.

Step S904, the terminal releases the target QoE configuration after determining that the QoE measurement is completed.

Step S905, the terminal reports a QoE measurement report to the network side device.

Among them, the terminal needs to determine the specific manner for reporting the measurement report according to whether the target network side device accessed by the terminal supports reporting the measurement report after moving out of the effective range of the QoE configuration. The specific manner for the terminal to determine and report the measurement report can refer to the description above.

Step S906, the terminal immediately releases the target QoE configuration.

It should be noted that when the configuration type parameters included in the QoE configuration release information are the Traditional QoE and the RAN-visible QoE, the QoE configuration release process is the same as that shown in FIG. 9.

### Embodiment 9

Assuming that the QoE configuration release information transmitted by the network side device to the terminal includes the service type parameter, the configuration type parameter which is RAN-visible QoE, and the release reason. The release reason is that the terminal moves out of the effective range of the QoE configuration.

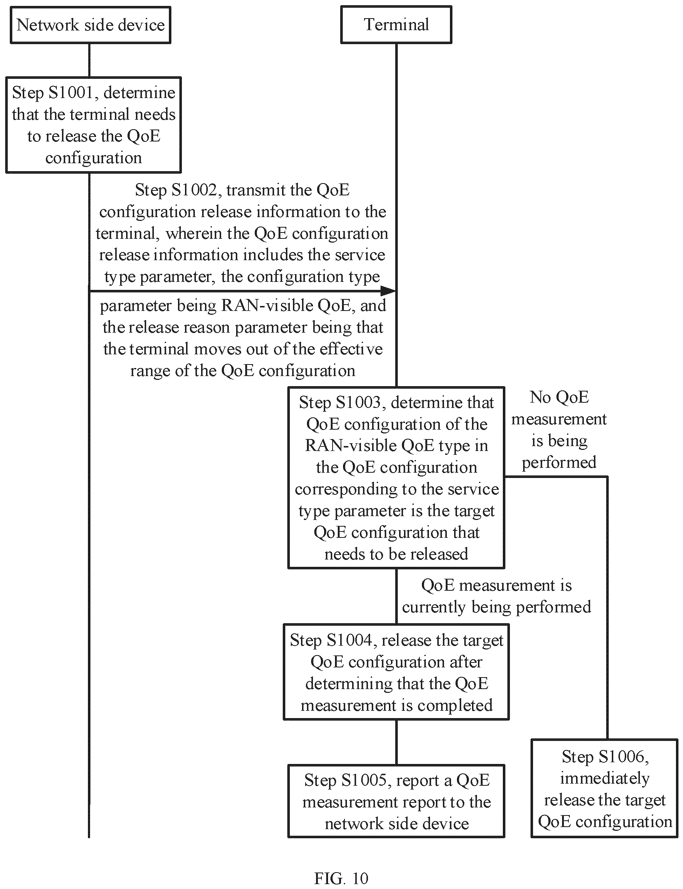

As shown in FIG. 10, in embodiments of the present application, the method for releasing QoE configuration includes the following steps.

Step S1001, the network side device determines that the terminal needs to release the QoE configuration.

Step S1002, the network side device transmits the QoE configuration release information to the terminal, wherein the QoE configuration release information includes the service type parameter, the configuration type parameter which is RAN-visible QoE, and the release reason parameter. The release reason parameter is that the terminal moves out of the effective range of the QoE configuration.

Step S1003, the terminal determines that QoE configuration of the RAN-visible QoE type in the QoE configuration corresponding to the service type parameter is the target QoE configuration that needs to be released.

The terminal determines whether QoE measurement is currently being performed; if yes, step S1004 is executed, if not, step S 1006 is executed.

Step S1004, the terminal releases the target QoE configuration after determining that the QoE measurement is completed.

Step S1005, the terminal reports a QoE measurement report to the network side device.

Among them, the terminal needs to determine the specific manner for reporting the measurement report according to whether the target network side device accessed by the terminal supports reporting the measurement report after moving out of the effective range of the QoE configuration. The specific manner for the terminal to determine and report the measurement report can refer to the description above.

Step S1006, the terminal immediately releases the target QoE configuration.

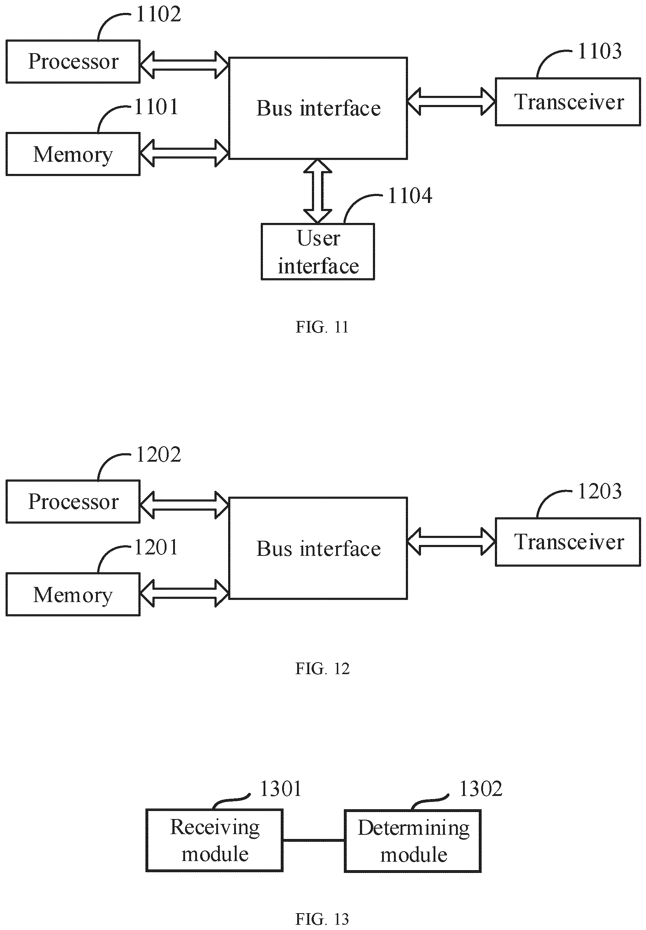

As shown in FIG. 11 , embodiments of the present application provides a terminal, including a memory 1101, a processor 1102, and a transceiver 1103; the memory 1101 is configured to store computer programs; the transceiver 1103 is configured to transmit and receive data under the control of the processor 1102; the processor 1102 is configured to read the computer programs in the memory 1101 and perform the following operations: receiving QoE configuration release information transmitted by the network side device, where the QoE configuration release information includes a release type parameter, and the release type parameter is configured to indicate a type of QoE configuration to be released by a terminal; determining target QoE configuration that needs to be released according to the release type parameter; and releasing the target QoE configuration.

Optionally, the processor 1102 is specifically configured to: if the release type parameter includes a configuration type parameter, and the QoE configuration release information further includes QoE identifier information, determine candidate QoE configuration corresponding to the QoE identifier information according to the QoE identifier information, and select QoE configuration corresponding to the configuration type parameter from the candidate QoE configuration as the target QoE configuration; or if the release type parameter includes a service type parameter, use QoE configuration corresponding to the service type parameter as the target QoE configuration; or if the release type parameter includes a configuration type parameter and a service type parameter, select QoE configuration corresponding to the configuration type parameter as the target QoE configuration from QoE configuration corresponding to the service type parameter.

Optionally, when selecting the QoE configuration corresponding to the configuration type parameter from the candidate QoE configuration as the target QoE configuration, the processor 1102 is specifically configured to: if the configuration type parameter is a first configuration type parameter, use all QoE configuration in the candidate QoE configuration as the target QoE configuration; if the configuration type parameter is a second configuration type parameter, select QoE configuration visible to the network side device from the candidate QoE configuration as the target QoE configuration.

Optionally, when selecting the QoE configuration corresponding to the configuration type parameter from the QoE configuration corresponding to the service type parameter as the target QoE configuration, the processor 1102 is specifically configured to: if the configuration type parameter is a first configuration type parameter, use all QoE configuration corresponding to the service type parameter as the target QoE configuration; if the configuration type parameter is a second configuration type parameter, select QoE configuration visible to the network side device as the target QoE configuration from QoE configuration corresponding to the service type parameter.

Optionally, the QoE configuration release information further includes a release reason parameter for indicating a reason for releasing the QoE configuration; the processor 1102 is specifically configured to: determine a release timing for releasing the target QoE configuration according to a release reason parameter comprised in the QoE configuration release information; and release the target QoE configuration after the release timing is reached.

Optionally, the processor 1102 is specifically configured to: if the release reason parameter indicates that a reason for releasing the QoE configuration is normal release, use a current moment as the release timing for releasing the target QoE configuration; if the release reason parameter indicates that a reason for releasing the QoE configuration is that the terminal moves out of an effective range of the QoE configuration, determine the release timing for releasing the target QoE configuration according to a current QoE measurement state of the terminal.

Optionally, the processor 1102 is specifically configured to: if the current QoE measurement state of the terminal is that no QoE measurement is performed, use a current moment as the release timing for releasing the target QoE configuration; if the current QoE measurement state of the terminal is that QoE measurement is being performed, determine a moment at which the QoE measurement ends as the release timing for releasing the target QoE configuration.

Optionally, if the moment at which the QoE measurement ends is as the release timing for releasing the target QoE configuration, the processor 1102 is further configured to: if a target network side device accessed by the terminal after the terminal moves out of the effective range of the QoE configuration supports reporting of measurement reports, report a QoE measurement report to the target network side device; if a target network side device accessed by the terminal after the terminal moves out of the effective range of the QoE configuration does not support reporting of measurement reports, store a QoE measurement report; after the terminal accesses a network side device that supports reporting of measurement reports, report the QoE measurement report to the network side device that supports reporting of measurement reports; or, if the terminal accesses a network side node that supports reporting of measurement reports within a preset period of time, report the QoE measurement report to a network side device that supports reporting of measurement reports, otherwise, delete the QoE measurement report.

Among them, in FIG. 11, the bus architecture may include any number of interconnected buses and bridges, specifically one or more processors represented by the processor 1102 and various circuits of the memory represented by the memory 1101 are linked together. The bus architecture can also link together various other circuits such as peripherals, voltage regulators, and power management circuits, etc., which are well known in the art and therefore will not be further described herein. The bus interface provides the interface. The transceiver 1103 may be a plurality of elements, including a transmitter and a receiver, providing a unit for communicating with various other devices over transmission media, the transmission media includes wireless channels, wired channels, fiber optic cables, etc. For different user devices, the user interface 1104 may also be an interface capable of connecting externally and internally to required device, and the connected device includes but not limited to a keypad, a display, a speaker, a microphone, a joystick, and the like.

The processor 1102 is responsible for managing the bus architecture and general processing, and the memory 1101 can store data used by the processor 1102 when performing operations.

Optionally, the processor 1102 can be a CPU (Central Processing Unit), ASIC (Application Specific Integrated Circuit), FPGA (Field-Programmable Gate Array) or CPLD (Complex Programmable Logic Device), and the processor can also adopt a multi-core architecture.

The processor is configured to execute any one of the methods provided in the embodiments of the present application according to the obtained executable instructions by calling the computer program stored in the memory. The processor and memory may also be physically separated.

As shown in FIG. 12, embodiments of the present application provides a network side device, including a memory 1201, a processor 1202, and a transceiver 1203; the memory 1201 is configured to store computer programs; the transceiver 1203 is configured to transmit and receive data under the control of the processor 1202; the processor 1202 is configured to read the computer programs in the memory 1201 and perform the following operations: generating QoE configuration release information including a release type parameter after determining that the terminal needs to release the QoE configuration; where the release type parameter is configured to indicate a type of QoE configuration to be released by a terminal; transmitting the QoE configuration release information to the terminal.

Optionally, the release type parameter includes a configuration type parameter and/or a service type parameter, and the QoE configuration release information further includes a release reason parameter for indicating a reason for releasing the QoE configuration; the processor 1202 is specifically configured to: transmit the QoE configuration release information including the release type parameter and the release reason parameter to the terminal; where the release reason parameter is configured to indicate the terminal to determine a release timing of the target QoE configuration according to the release reason parameter.

Among them, in FIG. 12, the bus architecture may include any number of interconnected buses and bridges, specifically, one or more processors represented by the processor 1202 and various circuits of the memory represented by the memory 1201 are linked together. The bus architecture can also link together various other circuits such as peripherals, voltage regulators, and power management circuits, etc., which are well known in the art and therefore will not be further described herein. The bus interface provides the interface. The transceiver 1203 may be a plurality of elements, including a transmitter and a receiver, providing a unit for communicating with various other devices over transmission media, the transmission media includes wireless channels, wired channels, fiber optic cables, etc. The processor 1202 is responsible for managing the bus architecture and general processing, and the memory 1201 can store data used by the processor 1202 when performing operations.

The processor 1202 may be a CPU, ASIC, FPGA or CPLD, and the processor may also adopt a multi-core architecture.

As shown in FIG. 13, embodiments of the present application provides a device for releasing QoE configuration, including: a receiving module 1301, configured to receive QoE configuration release information transmitted by the network side device, wherein the QoE configuration release information comprises a release type parameter, and the release type parameter is configured to indicate a type of QoE configuration to be released by a terminal; a determining module 1302, configured to determine target QoE configuration that needs to be released according to the release type parameter; and release the target QoE configuration.

Optionally, the determining module 1302 is specifically configured to: if the release type parameter includes a configuration type parameter, and the QoE configuration release information further includes QoE identifier information, determine candidate QoE configuration corresponding to the QoE identifier information according to the QoE identifier information, and select QoE configuration corresponding to the configuration type parameter from the candidate QoE configuration as the target QoE configuration; or if the release type parameter includes a service type parameter, use QoE configuration corresponding to the service type parameter as the target QoE configuration; or if the release type parameter includes a configuration type parameter and a service type parameter, select QoE configuration corresponding to the configuration type parameter as the target QoE configuration from QoE configuration corresponding to the service type parameter.

Optionally, when selecting the QoE configuration corresponding to the configuration type parameter from the candidate QoE configuration as the target QoE configuration, the determining module 1302 is specifically configured to: if the configuration type parameter is a first configuration type parameter, use all QoE configuration in the candidate QoE configuration as the target QoE configuration; if the configuration type parameter is a second configuration type parameter, select QoE configuration visible to the network side device from the candidate QoE configuration as the target QoE configuration.

Optionally, when selecting the QoE configuration corresponding to the configuration type parameter from the QoE configuration corresponding to the service type parameter as the target QoE configuration, the determining module 1302 is specifically configured to: if the configuration type parameter is a first configuration type parameter, use all QoE configuration corresponding to the service type parameter as the target QoE configuration; if the configuration type parameter is a second configuration type parameter, select QoE configuration visible to the network side device as the target QoE configuration from QoE configuration corresponding to the service type parameter.

Optionally, the QoE configuration release information further includes a release reason parameter for indicating a reason for releasing the QoE configuration; the determining module 1302 is specifically configured to: determine a release timing for releasing the target QoE configuration according to the release reason parameter comprised in the QoE configuration release information; and release the target QoE configuration after the release timing is reached.

Optionally, the determining module 1302 is specifically configured to: if the release reason parameter indicates that a reason for releasing the QoE configuration is normal release, use a current moment as the release timing for releasing the target QoE configuration; if the release reason parameter indicates that a reason for releasing the QoE configuration is that the terminal moves out of an effective range of the QoE configuration, determine the release timing for releasing the target QoE configuration according to a current QoE measurement state of the terminal.

Optionally, the determining module 1302 is specifically configured to: if the current QoE measurement state of the terminal is that no QoE measurement is performed, use a current moment as the release timing for releasing the target QoE configuration; if the current QoE measurement state of the terminal is that QoE measurement is being performed, determine a moment at which the QoE measurement ends as the release timing for releasing the target QoE configuration.

Optionally, if the moment at which the QoE measurement ends is as the release timing for releasing the target QoE configuration, the determining module 1302 is specifically configured to: if a target network side device accessed by the terminal after the terminal moves out of the effective range of the QoE configuration supports reporting of measurement reports, report a QoE measurement report to the target network side device; if a target network side device accessed by the terminal after the terminal moves out of the effective range of the QoE configuration does not support reporting of measurement reports, store a QoE measurement report; after the terminal accesses a network side device that supports reporting of measurement reports, report the QoE measurement report to the network side device that supports reporting of measurement reports; or, if the terminal accesses a network side node that supports reporting of measurement reports within a preset period of time, report the QoE measurement report to a network side device that supports reporting of measurement reports, otherwise, delete the QoE measurement report.

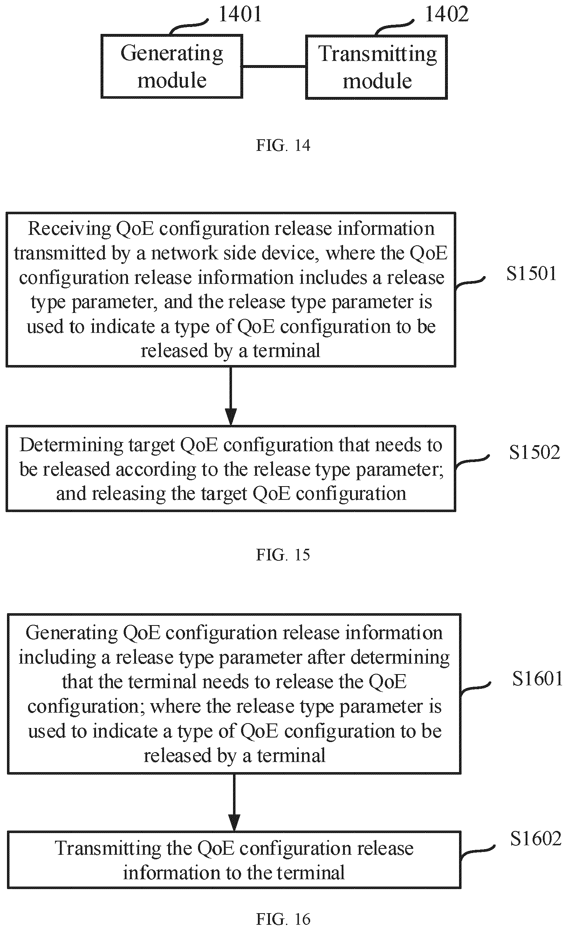

As shown in FIG. 14, embodiments of the present application provides a device for releasing QoE configuration, including: a generating module 1401, configured to generate QoE configuration release information including a release type parameter after determining that the terminal needs to release the QoE configuration; where the release type parameter is configured to indicate a type of QoE configuration to be released by a terminal; a transmitting module 1402, configured to transmit the QoE configuration release information to the terminal.

Optionally, the release type parameter includes a configuration type parameter and/or a service type parameter, and the QoE configuration release information further includes a release reason parameter for indicating a reason for releasing the QoE configuration; the transmitting module 1402 is specifically configured to: transmit QoE configuration release information including the release type parameter and the release reason parameter to the terminal; where the release reason parameter is configured to indicate the terminal to determine a release timing of the target QoE configuration according to the release reason parameter.

It should be noted that the division of modules in embodiments of the present application is schematic, and is only a logical function division, and there may be other division manners in actual implementation. In addition, each functional module in each embodiment of the present application may be integrated into one processing module, each module may exist separately physically, or two or more modules may be integrated into one module. The above-mentioned integrated modules can be implemented in the form of hardware or in the form of software function modules.

If the integrated modules are realized in the form of software function modules and sold or used as independent products, they can be stored in a computer-readable storage medium. Based on this understanding, the technical solution of the present application is essentially or part of the contribution to the prior art or all or part of the technical solution can be embodied in the form of a software product, and the computer software product is stored in a storage medium , including several instructions to make a computer device (which may be a personal computer, a server, or a network device, etc.) or a processor (processor) execute all or part of the steps of the methods described in each embodiment of the present application. The aforementioned storage media include: U disk, mobile hard disk, read-only memory (ROM), random access memory (RAM), magnetic disk or optical disc and other media that can store program codes.

Based on the same inventive concept, embodiments of the present application provide a method for releasing QoE configuration, which corresponds to the terminal in the above system. Since the method and the system have similar problem-solving principles, the implementation of the method can refer to the implementation of the system, and repetitions will not be repeated again.

As shown in FIG. 15, a method for releasing QoE configuration provided by embodiments of the present application is performed by the terminal side, and the method includes: step S1501, receiving QoE configuration release information transmitted by the network side device, where the QoE configuration release information includes a release type parameter, and the release type parameter is configured to indicate a type of QoE configuration to be vreleased by a terminal; step S1502, determining target QoE configuration that needs to be released according to the release type parameter; and releasing the target QoE configuration.

Optionally, the determining the target QoE configuration that needs to be released according to the release type parameter, specifically includes: if the release type parameter includes a configuration type parameter, and the QoE configuration release information further includes QoE identifier information, determining candidate QoE configuration corresponding to the QoE identifier information according to the QoE identifier information, and selecting QoE configuration corresponding to the configuration type parameter from the candidate QoE configuration as the target QoE configuration; or if the release type parameter includes a service type parameter, using QoE configuration corresponding to the service type parameter as the target QoE configuration; or if the release type parameter includes a configuration type parameter and a service type parameter, selecting QoE configuration corresponding to the configuration type parameter as the target QoE configuration from QoE configuration corresponding to the service type parameter.

Optionally, the selecting the QoE configuration corresponding to the configuration type parameter from the candidate QoE configuration as the target QoE configuration, includes: if the configuration type parameter is a first configuration type parameter, using all QoE configuration in the candidate QoE configuration as the target QoE configuration; if the configuration type parameter is a second configuration type parameter, selecting QoE configuration visible to the network side device from the candidate QoE configuration as the target QoE configuration.

Optionally, the selecting the QoE configuration corresponding to the configuration type parameter as the target QoE configuration from the QoE configuration corresponding to the service type parameter, includes: if the configuration type parameter is a first configuration type parameter, using all QoE configuration corresponding to the service type parameter as the target QoE configuration; if the configuration type parameter is a second configuration type parameter, selecting QoE configuration visible to the network side device as the target QoE configuration from QoE configuration corresponding to the service type parameter.

Optionally, the QoE configuration release information further includes a release reason parameter for indicating a reason for releasing the QoE configuration; the releasing the target QoE configuration, specifically includes: determining a release timing for releasing the target QoE configuration according to a release reason parameter comprised in the QoE configuration release information; releasing the target QoE configuration after the release timing is reached.

Optionally, the determining the release timing for releasing the target QoE configuration according to the release reason parameter included in the QoE configuration release information, specifically includes: if the release reason parameter indicates that a reason for releasing the QoE configuration is normal release, using a current moment as the release timing for releasing the target QoE configuration; if the release reason parameter indicates that a reason for releasing the QoE configuration is that the terminal moves out of an effective range of the QoE configuration, determining the release timing for releasing the target QoE configuration according to a current QoE measurement state of the terminal.

Optionally, the determining the release timing for releasing the target QoE configuration according to the current QoE measurement state of the terminal specifically includes: if the current QoE measurement state of the terminal is that no QoE measurement is performed, using a current moment as the release timing for releasing the target QoE configuration; if the current QoE measurement state of the terminal is that QoE measurement is being performed, determining a moment at which the QoE measurement ends as the release timing for releasing the target QoE configuration.

Optionally, if the moment at which the QoE measurement ends is as the release timing for releasing the target QoE configuration, the method further includes: if a target network side device accessed by the terminal after the terminal moves out of the effective range of the QoE configuration supports reporting of measurement reports, reporting a QoE measurement report to the target network side device; if a target network side device accessed by the terminal after the terminal moves out of the effective range of the QoE configuration does not support reporting of measurement reports, storing a QoE measurement report; after the terminal accesses a network side device that supports reporting of measurement reports, reporting the QoE measurement report to the network side device that supports reporting of measurement reports; or, if the terminal accesses a network side node that supports reporting of measurement reports within a preset period of time, reporting the QoE measurement report to a network side device that supports reporting of measurement reports, otherwise, deleting the QoE measurement report.

Based on the same inventive concept, embodiments of the present application also provide a method for releasing QoE configuration, which corresponds to the RAN node in the above system. Since the method and the system have similar problem-solving principles, the implementation of the method can refer to the implementation of the system, and repetitions will not be repeated again.

As shown in FIG. 16, a method for QoE releasing configuration provided by embodiments of the present application is performed by a network side device, and the method includes: step S1601, generating QoE configuration release information including a release type parameter after determining that the terminal needs to release the QoE configuration; where the release type parameter is configured to indicate a type of QoE configuration to be released by a terminal; step S 1602, transmitting the QoE configuration release information to the terminal.

Optionally, the release type parameter includes a configuration type parameter and/or a service type parameter, and the QoE configuration release information further includes a release reason parameter for indicating a reason for releasing the QoE configuration; where the transmitting the QoE configuration release information to the terminal, specifically includes: transmitting the QoE configuration release information including the release type parameter and the release reason parameter to the terminal; where the release reason parameter is configured to indicate the terminal to determine a release timing of the target QoE configuration according to the release reason parameter.

In addition, embodiments of the present application further provide a computer-readable storage medium, where the computer-readable storage medium stores computer programs, and the computer programs are configured to cause the computer to execute any one of the above methods for releasing QoE configuration.

The computer-readable storage medium can be any available medium or data storage device that can be accessed by a computer, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

It should be understood by those skilled persons in the art, the embodiments of the present disclosure may be provided as a method, a system, or a computer program product. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage medium (including but not limited to a disk storage, CD-ROM, an optical storage, and the like) having computer-usable program code embodied therein.

The present disclosure is described with reference to flowchart illustrations and/or block diagrams of methods, apparatus (systems), and computer program products according to embodiments of the present disclosure. It should be understood that each flow and/or block in the flowchart illustrations and/or block diagrams, and combinations of flows and/or blocks in the flowchart illustrations and/or block diagrams, can be implemented by computer program instructions. These computer program instructions may be provided to the processor of a general purpose computer, a special purpose computer, an embedded processor or other programmable data processing device to produce a machine, such that the instructions executed by the processor of the computer or other programmable data processing device produce devices for implementing the functions specified in a flow or flow of a flowchart and/or a block or blocks of a block diagram.

These computer program instructions may also be stored in a computer-readable memory capable of directing a computer or other programmable data processing apparatus to function in a particular manner, such that the instructions stored in the computer-readable memory result in an article of manufacture including instruction devices, the instructions device implements the functions specified in one or more flows of the flowchart and/or one or more blocks of the block diagrams.

These computer program instructions can also be loaded on a computer or other programmable data processing device to cause a series of operational steps to be performed on the computer or other programmable device to produce a computer-implemented process, such that the instructions performed on the computer or other programmable device provide steps for implementing the functions specified in the one or more flows of the flowcharts and/or one or more blocks of the block diagrams.

Obviously, those skilled persons in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A method for releasing quality of experience (QoE) configuration, comprising:
receiving QoE configuration release information transmitted by a network side device, wherein the QoE configuration release information comprises a release type parameter, and the release type parameter is used to indicate a type of QoE configuration to be released by a terminal
determining target QoE configuration that needs to be released according to the release type parameter; and
releasing the target QoE configuration.

2. The method according to claim 1, wherein the determining the target QoE configuration that needs to be released according to the release type parameter, further comprises:
in a case that the release type parameter comprises a configuration type parameter, and the QoE configuration release information further comprises QoE identifier information, determining candidate QoE configuration corresponding to the QoE identifier information according to the QoE identifier information, and selecting QoE configuration corresponding to the configuration type parameter from the candidate QoE configuration as the target QoE configuration; or
in a case that the release type parameter comprises a service type parameter, using QoE configuration corresponding to the service type parameter as the target QoE configuration; or
in a case that the release type parameter comprises a configuration type parameter and a service type parameter, selecting QoE configuration corresponding to the configuration type parameter as the target QoE configuration from QoE configuration corresponding to the service type parameter.

3. The method according to claim 2, wherein the selecting the QoE configuration corresponding to the configuration type parameter from the candidate QoE configuration as the target QoE configuration, comprises:
in a case that the configuration type parameter is a first configuration type parameter, using all QoE configuration in the candidate QoE configuration as the target QoE configuration;
in a case that the configuration type parameter is a second configuration type parameter, selecting QoE configuration visible to the network side device from the candidate QoE configuration as the target QoE configuration.

4. The method according to claim 2, wherein the selecting the QoE configuration corresponding to the configuration type parameter as the target QoE configuration from the QoE configuration corresponding to the service type parameter, comprises:
in a case that the configuration type parameter is a first configuration type parameter, using all QoE configuration corresponding to the service type parameter as the target QoE configuration;
in a case that the configuration type parameter is a second configuration type parameter, selecting QoE configuration visible to the network side device as the target QoE configuration from QoE configuration corresponding to the service type parameter.

5. The method according to any one of claims 1 to 4, wherein the QoE configuration release information further comprises a release reason parameter for indicating a reason for releasing the QoE configuration;
wherein the releasing the target QoE configuration further comprises:
determining a release timing for releasing the target QoE configuration according to the release reason parameter comprised in the QoE configuration release information;
releasing the target QoE configuration after the release timing is reached.

6. The method according to claim 5, wherein the determining the release timing for releasing the target QoE configuration according to the release reason parameter comprised in the QoE configuration release information, further comprises:
in a case that the release reason parameter indicates that a reason for releasing the QoE configuration is normal release, using a current moment as the release timing for releasing the target QoE configuration;
in a case that the release reason parameter indicates that a reason for releasing the QoE configuration is that the terminal moves out of an effective range of the QoE configuration, determining the release timing for releasing the target QoE configuration according to a current QoE measurement state of the terminal.

7. The method according to claim 6, wherein the determining the release timing for releasing the target QoE configuration according to the current QoE measurement state of the terminal further comprises:
in a case that the current QoE measurement state of the terminal is that no QoE measurement is performed, using a current moment as the release timing for releasing the target QoE configuration;
in a case that the current QoE measurement state of the terminal is that QoE measurement is being performed, determining a moment at which a QoE measurement ends as the release timing for releasing the target QoE configuration.

8. The method according to claim 7, wherein, in a case that the moment at which the QoE measurement ends is as the release timing for releasing the target QoE configuration, the method further comprises:
in a case that a target network side device accessed by the terminal after the terminal moves out of the effective range of the QoE configuration supports reporting of measurement reports, reporting a QoE measurement report to the target network side device;
in a case that a target network side device accessed by the terminal after the terminal moves out of the effective range of the QoE configuration does not support reporting of measurement reports, storing a QoE measurement report; after the terminal accesses a network side device that supports reporting of measurement reports, reporting the QoE measurement report to the network side device that supports reporting of measurement reports; or, in a case that the terminal accesses a network side node, that supports reporting of measurement reports, within a preset period of time, reporting the QoE measurement report to a network side device that supports reporting of measurement reports, otherwise, deleting the QoE measurement report.

9. A method for releasing quality of experience (QoE) configuration, comprising:
generating QoE configuration release information comprising a release type parameter after determining that the terminal needs to release the QoE configuration; wherein the release type parameter is used to indicate a type of QoE configuration to be released by a terminal;
transmitting the QoE configuration release information to the terminal.

10. The method according to claim 9, wherein the release type parameter comprises a configuration type parameter and/or a service type parameter, and the QoE configuration release information further comprises a release reason parameter for indicating a reason for releasing the QoE configuration;
wherein the transmitting the QoE configuration release information to the terminal, further comprises:
transmitting the QoE configuration release information comprising the release type parameter and the release reason parameter to the terminal; wherein the release reason parameter is used to indicate the terminal to determine a release timing of the target QoE configuration according to the release reason parameter.

11. A terminal, comprising: a memory, a processor, and a transceiver; wherein:
the memory is configured to store computer programs;
the transceiver is configured to transmit and receive data under a control of the processor;
the processor is configured to read the computer programs in the memory and perform the following operations:
receiving quality of experience (QoE)configuration release information transmitted by a network side device, wherein the QoE configuration release information comprises a release type parameter, and the release type parameter is used to indicate a type of QoE configuration to be released by a terminal;
determining target QoE configuration that needs to be released according to the release type parameter; and
releasing the target QoE configuration.

12. The terminal according to claim 11, wherein the processor is further configured to:
in a case that the release type parameter comprises a configuration type parameter, and the QoE configuration release information further comprises QoE identifier information, determine candidate QoE configuration corresponding to the QoE identifier information according to the QoE identifier information, and select QoE configuration corresponding to the configuration type parameter from the candidate QoE configuration as the target QoE configuration; or
in a case that the release type parameter comprises a service type parameter, use QoE configuration corresponding to the service type parameter as the target QoE configuration; or
in a case that the release type parameter comprises a configuration type parameter and a service type parameter, select QoE configuration corresponding to the configuration type parameter as the target QoE configuration from QoE configuration corresponding to the service type parameter.

13. The terminal according to claim 12, wherein, in a case that selecting the QoE configuration corresponding to the configuration type parameter from the candidate QoE configuration as the target QoE configuration, the processor is further configured to:
in a case that the configuration type parameter is a first configuration type parameter, use all QoE configuration in the candidate QoE configuration as the target QoE configuration;
in a case that the configuration type parameter is a second configuration type parameter, select QoE configuration visible to the network side device from the candidate QoE configuration as the target QoE configuration.

14. The terminal according to claim 12, wherein, in a case that selecting the QoE configuration corresponding to the configuration type parameter as the target QoE configuration from the QoE configuration corresponding to the service type parameter, the processor is further configured to:
in a case that the configuration type parameter is a first configuration type parameter, use all QoE configuration corresponding to the service type parameter as the target QoE configuration;
in a case that the configuration type parameter is a second configuration type parameter, select QoE configuration visible to the network side device as the target QoE configuration from QoE configuration corresponding to the service type parameter.

15. The terminal according to any one of claims 11 to 14, wherein the QoE configuration release information further comprises a release reason parameter for indicating a reason for releasing the QoE configuration;
the processor is further configured to:
determine a release timing for releasing the target QoE configuration according to the release reason parameter comprised in the QoE configuration release information;
release the target QoE configuration after the release timing is reached.

16. The terminal according to claim 15, wherein the processor is further configured to:
in a case that the release reason parameter indicates that a reason for releasing the QoE configuration is normal release, use a current moment as the release timing for releasing the target QoE configuration;
in a case that the release reason parameter indicates that a reason for releasing the QoE configuration is that the terminal moves out of an effective range of the QoE configuration, determine the release timing for releasing the target QoE configuration according to a current QoE measurement state of the terminal.

17. The terminal according to claim 16, wherein the processor is further configured to:
in a case that the current QoE measurement state of the terminal that no QoE measurement is performed, use a current moment as the release timing for releasing the target QoE configuration;
in a case that the current QoE measurement state of the terminal is that QoE measurement is being performed, determine a moment at which a QoE measurement ends as the release timing for releasing the target QoE configuration.

18. The terminal according to claim 17, wherein, in a case that the moment at which the QoE measurement ends is as the release timing for releasing the target QoE configuration, the processor is further configured to:
in a case that a target network side device accessed by the terminal after the terminal moves out of the effective range of the QoE configuration supports reporting of measurement reports, report a QoE measurement report to the target network side device;
in a case that a target network side device accessed by the terminal after the terminal moves out of the effective range of the QoE configuration does not support reporting of measurement reports, store a QoE measurement report; after the terminal accesses a network side device that supports reporting of measurement reports, report the QoE measurement report to the network side device that supports reporting of measurement reports; or, in a case that the terminal accesses a network side node that supports reporting of measurement reports within a preset period of time, report the QoE measurement report to a network side device that supports reporting of measurement reports, otherwise, delete the QoE measurement report.

19. A network side device, comprising: a memory, a processor, and a transceiver; wherein:
the memory is configured to store computer programs;
the transceiver is configured to transmit and receive data under the control of the processor;
the processor is configured to read the computer programs in the memory and perform the following operations:
generating quality of experience (QoE) configuration release information comprising a release type parameter after determining that the terminal needs to release the QoE configuration; wherein the release type parameter is used to indicate a type of QoE configuration to be released by a terminal;
transmitting the QoE configuration release information to the terminal.

20. The network side device according to claim 19, wherein the release type parameter comprises a configuration type parameter and/or a service type parameter, and the QoE configuration release information further comprises a release reason parameter for indicating a reason for releasing the QoE configuration;
the processor is further configured to:
transmit the QoE configuration release information comprising the release type parameter and the release reason parameter to the terminal; wherein the release reason parameter is used to indicate the terminal to determine a release timing of the target QoE configuration according to the release reason parameter.

21. A device for releasing quality of experience (QoE) configuration, comprsing:
a receiving module, configured to receive QoE configuration release information transmitted by a network side device, wherein the QoE configuration release information comprises a release type parameter, and the release type parameter is used to indicate a type of QoE configuration to be released by a terminal;
a determining module, configured to determine target QoE configuration that needs to be released according to the release type parameter; and release the target QoE configuration.

22. A device for releasing quality of experience (QoE) configuration, comprising:
a generating module, configured to generate QoE configuration release information comprising a release type parameter after determining that a terminal needs to release the QoE configuration; wherein the release type parameter is used to indicate a type of QoE configuration to be released by the terminal;
a transmitting module, configured to transmit the QoE configuration release information to the terminal.

23. A computer-readable storage medium, storing computer programs, the computer programs are configured to cause a computer to execute the method according to any one of claims 1 to 8, or the computer programs are configured to make a computer to execute the method according to claim 9 or 10.
